# EUROPEAN PATENT SPECIFICATION

(11) **EP 3 043 079 B1**
(45) Date of publication and mention of the grant of the patent: **08.05.2019**
(21) Application number: 15150671.4
(22) Date of filing: 09.01.2015
(51) Int. Cl.: F16B 5/06, E06B 9/13, E06B 9/58, E04H 15/64

(54) **Fastening device for sections of a sheet-like material**
Befestigungsvorrichtung für Abschnitte eines blattförmigen Materials
Dispositif de fixation pour des sections d'un matériau en feuille

(43) Date of publication of application: 13.07.2016
(60) Divisional application: 18181957.4
(73) Proprietor: Gloukhov, Vladislav, Moscow 141400 (RU)
(72) Inventor: Gloukhov, Vladislav, 141400 Moscow (RU); Mikhaylov, Alexey, 101000 Moscow (RU)
(74) Representative: Maikowski & Ninnemann Patentanwälte Partnerschaft mbB

(56) References cited:
- EP-A1- 1 840 321
- EP-A1- 2 503 183
- WO-A1-03/106805
- GB-A- 2 288 650
- US-A- 1 377 788
- US-A- 5 620 085

## Description

This specification refers to embodiments of a method for fastening sections of a sheet-like material using a fastening device.

In various applications such as sun shades, blinds, shutters, tents, or membrane construction, it is necessary to fasten sections of a sheet-like material to each other or to external holding structures.

This can be achieved by creating permanent connections, for example in form of a seam or weldseam. In some applications, eyelets are provided on the edge of the sheet-like material as a means for creating connections with other sections of a sheet-like material or with external structures.

The DE 100 51 451 A1 discloses a system for fastening the edges of sheet material comprising a U-profile, into which the edge is fitted. The edge is glued over a reinforcing strip and bent back over the sheet before it is inserted into the profile.

Another common solution for connecting a sheet-like material section to an external structure is to provide a piping on the edge of section of a sheet-like material, which is configured to be inserted and held (potentially slidably) in a guiding rail.

The WO 03/106 805 A1 describes a shutter comprising a flexible sheet and a guide channel, wherein the flexible sheet is movably installed on the guide channel via guide chains that are provided on either lateral edge of the flexible sheet. Each guide chain comprises a plurality of guide members, wherein each guide member is composed of a body portion and protrusions, which are joined to the flexible sheet. Further, each guide member has a connection hole for connecting the body portions to each other via a bendable elastic member that is inserted into the connections holes.

The EP 2 503 183 A1 discloses a connector assembly for connecting strap ends with two strip-shaped connector elements, each connector element having at a first longitudinal side an attachment portion for attachment to a strap end, and along a second longitudinal side a connecting portion with a connecting profile, which matingly engages in a corresponding connection profile of the other connector element.

Said known fastening devices generally allow either for fastening sections of a sheet-like material to each other, or for fastening such sections to special external holding devices. However, for reasons of flexibility, it is desirable to be able to use the same device for both purposes, depending on the task at hand.

Preferably, such a fastening device would be applicable to not only one type of material, but to a wide spectrum of a sheet-like materials, including, in particular robust materials like metal mesh.

Sometimes it is required to fasten non-linear, i.e. curved, edges of a sheet-like material. Further, in the case of flexible material sections that can be rolled up for transport or storage or as a functional feature, e.g. in shutters, it is desirable that the fastening devices attached to these section do not hinder this ability. This poses another requirement to the (also literal) flexibility of a fastening device.

It is an object to provide a method that allows for a robust and flexible fastening of sections of a sheet-like material to each other or to external holding structures.

A method for fastening sections of a sheet-like material uses a fastening device that comprises a plurality of holding elements, wherein at least one holding element has a fastening portion configured to be fastened on at least one edge portion of at least one section of a sheet-like material and a guide portion which is connected to said fastening portion, and wherein a flexible connecting element is configured to extend along said at least one edge portion and to be connected to the guide portion of said at least one holding element in a form-fitting and/or force-locking manner. The method comprises the steps of providing said plurality of holding elements, fastening the fastening portions of the holding elements on at least one edge portion of at least one section of a sheet-like material, and passing said flexible connecting element through loops of said guide portions of the plurality of holding elements along the at least one edge portion.

In a variant, the guide portions of said plurality of holding elements together with said flexible connecting element are inserted into the guiding chamber of a guiding rail. This is advantageous if the sheet-like material needs to be attached to an external structure and, in particular, if a sliding functionality is required, such as in shutters, moveable sun shades, and the like.

In an embodiment of a method for fastening a first edge portion of a first section of a sheet-like material on a second edge portion of a second section of a sheet-like material, first, the fastening portions of first holding elements are fastened on the first edge portion and the fastening portions of second holding elements are fastened on the second edge portion, then the first guide portions of said first holding elements and the second guide portions of said second holding elements are arranged adjacent to one another in a zip-like manner, and finally, the flexible connecting element is passed through the loops of the first guide portions and second guiding portions to connect said first holding elements and said second holding elements.

The holding elements are provided in the form of a rod comprising a plurality of integrally connected holding elements, wherein, first, said fastening sections of said holding elements forming the rod are fastened on said at least one edge portion, and then the individual holding elements are separated from each other.

The use of a plurality of holding elements which are individually attached to the edge of a sheet-like material bears the advantage that the fastening device is not limited to linear edges, but can flexibly adapt also to curved ones. Furthermore, by connecting the holding elements via a flexible connecting element, the whole structure gains stability, while still allowing for, e.g., rolling up the sheet-like section together with the fixing device in case of a flexible material.

In particular, the fastening portion of each holding element comprises a first tab and a second tab, which are configured to be fastened on a first and second side of an edge portion of said section of a sheet-like material, respectively, so as to enclose said edge portion from at least two sides. This allows for a strong and reliable connection between the holding elements and the sheet-like material and ensures a symmetrical strain.

For connecting a first edge portion to a second edge portion of sections of a sheet-like material, the guide portions of first holding elements (provided to be fastened to said first edge portion) and the guide portions of second holding elements (provided to be fastened to said second edge portion) are configured to be arranged adjacent to one another in a zip-like manner and to be connected with each other via said flexible connecting element engaging through said loops and extending along the edge portions.

The plurality of holding elements can be made of metal, in particular sheet metal, which can be processed with relative ease and provides a robust fixing device.

The flexible connecting element can comprise at least one plastic belt. The connecting element can also comprise at least one steel cable. The connecting element can comprise both at least one plastic belt and at least one steel cable, wherein the at least one steel cable is embedded in the at least one plastic belt for its reinforcement.

The fastening device can be used for fastening sections of a sheet-like material in a shutter device, a sun shade, a blind, a tent, or a membrane construction.

Those skilled in the art will recognize additional features and advantages upon reading the following detailed description, and upon viewing the accompanying drawings.

The parts in the figures are not necessarily to scale, instead emphasis being placed upon illustrating principles of the invention. Moreover, in the figures, like reference numerals designate corresponding parts. In the drawings:
- Fig. 1: illustrates a fastening device for a section of a sheet-like material according to one or more embodiments;
- Fig. 2: illustrates a lateral cross section of a fastening device as shown in Fig. 1;
- Fig. 3: illustrates a lateral cross section of an edge portion of a sheet-like material being slidably arranged in a guiding rail with a fastening device according to one or more embodiments;
- Fig. 4: illustrates two sections of a sheet-like material attached to each other with a fastening device according to one or more embodiments;
- Fig. 5: illustrates a rod comprising a plurality of integrally connected holding elements as used in a method for fastening sections of a sheet-like material.

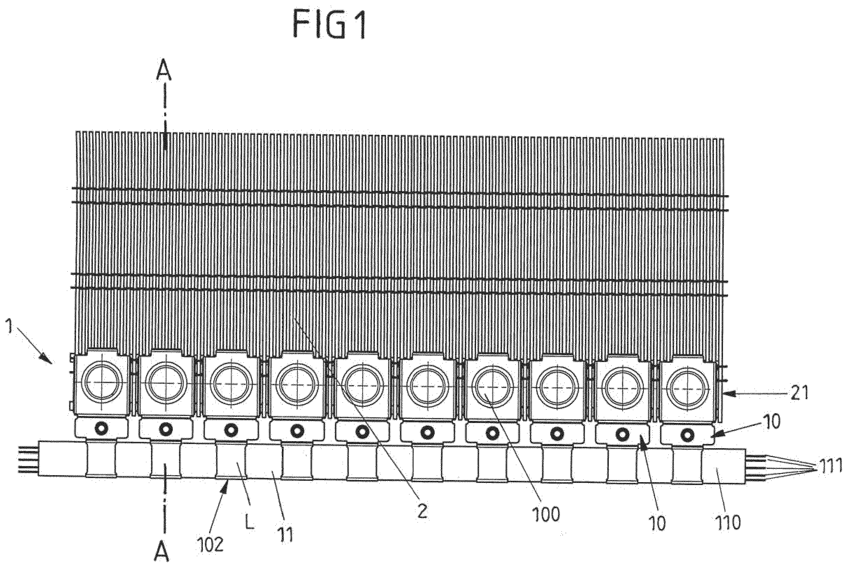

Fig. 1 illustrates an exemplary embodiment of a fastening device 1 for a section of a sheet-like material 2. In a preferable embodiment, the sheet-like material 2 can comprise a metal mesh. Alternatively, the sheet-like material can comprise, for example, textiles, PVC, Kevlar, ETFE, carbon fiber, aluminum, metal mesh, or carbon fiber. In particular, the sheet-like material 2 can be a flexible material. Such sections of sheet-like material can be parts of, for example, sun shades, blinds, shutters, tents or membrane construction.

In the embodiment of Fig. 1, a plurality of holding elements 10 are attached adjacent to one another to an edge portion 21 of said section of a sheet-like material 2. For instance, holding elements 10 can be made of metal, in particular sheet metal, which can be processed with ease and provides a robust device. The use of a plurality of holding elements 10 which are individually attached to the edge portion 21 of a sheet-like material sections 2 bears the advantage that the application of the fastening device 1 is not limited to linear edges 21, but can flexibly adapt also to curved ones.

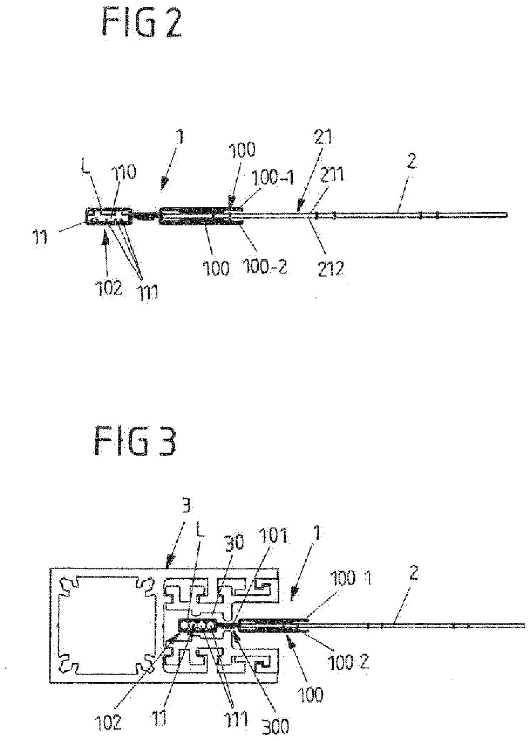

Each holding element 10 is fastened on said edge portion 21 with a fastening portion 100 and projects beyond the edge portion 21 with a guide portion 102, which is connected to the fastening portion 100. Each guide portion 102 exhibits a loop L, as best can be seen in the cross section view along the line A-A of a fastening device illustrated in Fig. 2.

A flexible connecting element 11 extending along said edge portion 21 engages through the loops L of the guide portions 102 of said plurality of holding elements 10 for connecting the plurality of holding elements 10. By connecting the holding elements 10 with a flexible connecting element 11, the whole structure gains stability, while still allowing for, e.g., rolling up the sheet-like section in case of a flexible material.

Thus, a method for fastening sections of a sheet-like material 2 with the fastening device 1 depicted in Fig. 1 comprises the steps of providing the plurality of holding elements 10, fastening the fastening portions 100 of the holding elements 10 on an edge portion 21 of at least one section of a sheet-like material 2, and passing the flexible connecting element 11 through said loops L of said guide portions 102 of the plurality of holding elements 10 along the edge portion 21.

In an advantageous embodiment, in which the edge portion 21 of the section of a sheet-like material 2 comprises metal, in particular metal mesh, and in which at least the fastening portions 100 of the holding elements 10 are made of metal, in particular sheet metal, the fastening of the fastening portions 100 of said holding elements 10 on said edge portion 21 can be carried out by resistance spot welding in order to achieve a reliable connection.

The flexible connecting element 11 can, for instance, comprise a plastic belt 110. In the exemplary embodiment illustrated in Fig. 1, a plurality of steel cables 111 are embedded in the plastic belt 110 for its reinforcement. Alternatively, the flexible connecting element 11 can, for instance, consist of one or several steel cables 111 only. This is illustrated in the exemplary embodiment of Fig. 3, where the connecting element comprises four steel cables 111 (shown in a cross section).

Fig. 2 illustrates a cross section of a fastening device as shown in Fig. 1 along the indicated line A-A. In this exemplary embodiment, the fastening portion 100 of each holding element 10 comprises a first tab 100-1 and a second tab 100-2, which are configured to be fastened on a first side 211 and on a second side 212 of an edge portion 21 of said section of a sheet-like material 2, respectively, so as to enclose said edge portion 21 from two sides 211, 212. This allows for a strong and reliable connection between the holding elements and the sheet-like material. In particular, the attachment of the first and second tabs 100-1, 100-2 on both sides of the section of sheet-like material 2 induces a symmetrical strain on the edge portion 21.

Fig. 3 illustrates a lateral cross section of an edge portion 21 of a sheet-like material section 2 which is arranged in a guiding rail 3 with a fastening device 1 according to the invention. The sheet-like material section 2 can, for example, be a part of a sun shade, and the guiding rail 3 can belong to a side channel of the sun shade attached to a wall. In the exemplary embodiment of Fig. 3, the guide portions 102 of the plurality of holding elements 10 together with the flexible connecting element 11 are slidably arranged in the guiding chamber 30 of the guiding rail 3 so as to allow for a sliding movement in a first direction parallel to the guiding rail 3. By contrast, movement of the guide portions 102 in direction different from said first direction is hindered due to the loop L of each guide portion 102 being larger than a slit 300 of the guiding chamber 30, wherein a slim bridge portion 101 of each guide portion 102 connecting the loop L to the fastening portion 100 projects through the slit 300. Thus, the guide portions 102 together with said flexible connecting element 11 can be inserted into the guiding chamber 30 of a guiding rail 3 in the first direction.

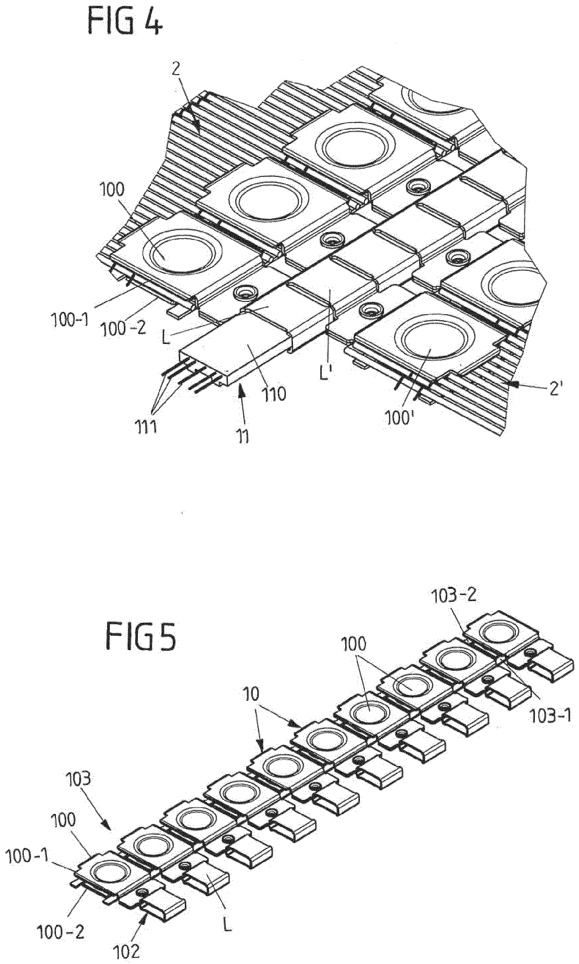

Fig. 4 illustrates two sections of a sheet-like material attached to each other using a fastening device 1 according to the invention. For connecting a first edge portion 21 to a second edge portion 21' of sections of sheet-like materials 2, 2', first guide portions 102 of first holding elements 10, which are fastened with their fastening portions 100 to said first edge portion 21, and second guide portions 102' of second holding elements 10', which are fastened with their fastening portions 100' to said second edge portion 21, are arranged adjacent to one another in a zip-like manner, wherein the fastening portions 100, 100' of adjacent first and second holding elements 10, 10' are oriented in opposite directions. The first and second guide portions 102, 102' are connected with each other via a flexible connecting element 11 engaging through said loops L, L' and extending along the edge portions 21, 21'.

In the exemplary embodiment shown in Fig. 4, the width of the loops L, L' is roughly half of the width of the fastening portions 100, 100' so as to allow, within the zip-like arrangement, for a dense alignment of the fastening portions 100, 100' on the respective edge portions 21, 21' of the sections of sheet-like material 2, 2' and, at the same time, of the loops L, L' of the guide portions 101, 101' on the flexible connecting element 11.

Correspondingly, in a method for fastening a first edge portion 21 of a first section of a sheet-like material 2 at a second edge portion 21' of a second section of a sheet-like material 2' with a fastening device as shown in Fig. 4, first, the fastening portions 100 of first holding elements 10 are fastened on the first edge portion 21 and the fastening portions 100' of second holding elements 10' are fastened on the second edge portion 21'. Then, the first guide portions 102 of said first holding elements 10 and the second guide portions 102' of said second holding elements 10' are arranged adjacent to one another in a zip-like manner. Finally, the flexible connecting element 11 is passed through the loops L, L' of the first guide portions 102 and second guiding portions 102' to connect said first holding elements 10 and said second holding elements 10'.

For fastening sections of a sheet-like material 2, 2' using a fastening device 1 according to one or more embodiments described above, it may be advantageous to provide said holding elements 10, 10' in the form of a rod 103 comprising a plurality of integrally connected holding elements 10, 10'. In particular, for ease of storage and transport, the rod 103 can be flexible so as to be arranged as a reel. If the holding devices are made of sheet metal, this form may arise naturally from the production. This form of providing the holding elements 10 can also facilitate the handling of the holding elements 10 and their alignment with an edge portion 21, 21' of a sheet-like material section 2, 2'.

Fig. 5 illustrates a rod 103 consisting of a plurality of integrally connected holding elements 10. The fastening portions 100 of adjacent holding elements 10 are connected via first 103-1 and second 103-2 lateral connection bridges. The lateral connection bridges 103-1, 103-2 can, for example, consists of a thin piece of sheet metal which can be easily cut. Thus, it is easily possible to obtain a rod of the appropriate length (adapted to the length of an edge portion 21) from a reel of integrally connected holding elements 10. For an easy handling of the rod 103 and levelling with the edge portion 21, 21' before the fastening step, it can be advantageous to pass, for example, one or more steel cables as a provisional connecting element through the loops L of the guide elements 102, 102'.

Preferably, the individual holding elements 10, 10' are separated from each other, for example by cutting the lateral connection bridges 103-1, 103-2, at least after fastening the fastening portions 100, 100' on an edge portion 21, 21'. This ensures the full flexibility of the edge portion, for instance, for rolling up flexible material sections 2, 2' for transport or storage or as a functional feature, e.g. in shutters.

In a variant method suitable, in particular, for metal mesh as the sheet-like material 2, the second lateral connection bridges 103-2, which are situated further away from the guide portions 102 than the first lateral connection bridges 103-1, are cut before fastening the fastening portions 100 on an edge portion 21. The fastening of the fastening portions 100 on the edge portion 21 may, for example, be achieved by resistance spot welding. Then the provisional connecting element (if used) is removed and the first lateral connection bridges 103-1 are cut in order to ensure a good flexibility of the edge portion 21.

### List of reference signs

- 1: Fastening device
- 10, 10': Holding elements
- 100, 100': Fastening portion
- 100-1: First tab
- 100-2: Second tab
- 102, 102': Guide portion
- 103: Rod
- 103-1: First lateral connection bridge
- 103-2: Second lateral connection bridge
- 11: Connecting element
- 110: Plastic belt
- 111: Steel cable

- 2, 2': Section of a sheet-like material
- 21, 21': Edge portion
- 211, 211': First side
- 212, 212': Second side

- 3: Guiding rail
- 30: Guiding chamber
- 300: Slit

- 4: Method
- 40: Providing of holding elements
- 41: Fastening of fastening portions
- 42: Passing connecting elements through loops

- L, L': Loop

## Claims

1. A method for fastening sections of a sheet-like material (2, 2') with a fastening device (1) that comprises a plurality of holding elements (10, 10'), wherein at least one holding element (10, 10') has
- a fastening portion (100, 100') configured to be fastened on at least one edge portion (21, 21') of at least one section of a sheet-like material (2, 2') and
- a guide portion (102, 102') which is connected to said fastening portion (100, 100'),
wherein a flexible connecting element (11) is configured to extend along said at least one edge portion (21, 21') and to be connected to the guide portion (102, 102') of said at least one holding element (10, 10') in a form-fitting and/or force-locking manner, the method comprising the steps of:
- providing said plurality of holding elements (10, 10'),
- Fastening the fastening portions (100, 100') of the holding elements (10, 10') on at least one edge portion (21, 21') of at least one section of a sheet-like material (2, 2'), and
- Passing said flexible connecting element (11) through loops (L, L') of said guide portions (102, 102') of the plurality of holding elements (10, 10 ') along the at least one edge portion (21, 21'),
whereby the holding elements (10, 10') are provided in the form of a rod (103) comprising a plurality of integrally connected holding elements (10, 10');
**characterized in that**
- first, said fastening portions (100, 100') of said holding elements (10, 10') forming the rod (103) are fastened on said at least one edge portion (21, 21'), and then
- the individual holding elements (10, 10') are separated from each other.

2. The method of claim 1, **characterized in that** said guide portions (102, 102') of said plurality of holding elements (10, 10') together with said flexible connecting element (11) are inserted into a guiding chamber (30) of a guiding rail (3).

3. The method of claim 1, **characterized in that** for fastening a first edge portion (21) of a first section of a sheet-like material (2) on a second edge portion (21') of a second section of a sheet-like material (2')
- the fastening portions (100) of first holding elements (10) are fastened on the first edge portion (21),
- the fastening portions (100') of second holding elements (10') are fastened on the second edge portion (21'),
- the first guide portions (102) of said first holding elements (10) and the second guide portions (102') of said second holding elements (10') are arranged adjacent to one another in a zip-like manner, and
- the flexible connecting element (11) is passed through the loops (L, L') of the first guide portions (102) and second guiding portions (102') to connect said first holding elements (10) and said second holding elements (10').

## Patentansprüche

1. Verfahren zum Befestigen von Abschnitten eines blattförmigen Materials (2, 2') mit einer Befestigungsvorrichtung (1), die mehrere Halteelemente (10, 10') umfasst, wobei zumindest ein Halteelement (10, 10') Folgendes aufweist
- einen Befestigungsteil (100, 100'), dazu ausgelegt, an zumindest einem Kantenteil (21, 21') von zumindest einem Abschnitt eines blattförmigen Materials (2, 2') befestigt zu werden, und
- einen Führungsteil (102, 102'), der mit dem Befestigungsteil (100, 100') verbunden ist,
wobei ein flexibles Verbindungselement (11) dazu ausgelegt ist, sich entlang des zumindest einen Kantenteils (21, 21') zu erstrecken und mit dem Führungsteil (102, 102') des zumindest einen Halteelements (10, 10') in einer formschlüssigen und/oder kraftschlüssigen Weise verbunden zu sein, wobei das Verfahren die folgenden Schritte umfasst:
- Bereitstellen der mehreren Halteelemente (10, 10'),
- Befestigen der Befestigungsteile (100, 100') der Halteelemente (10, 10') an zumindest einem Kantenteil (21, 21') von zumindest einem Abschnitt eines blattförmigen Materials (2, 2'), und
- Durchführen des flexiblen Verbindungselements (11) durch Schlaufen (L, L') der Führungsteile (102, 102') der mehreren Halteelemente (10, 10') entlang des zumindest einen Kantenteils (21, 21'),
wobei die Halteelemente (10, 10') in der Form einer Stange (103) bereitgestellt sind, umfassend mehrere integral verbundene Halteelemente (10, 10'); **dadurch gekennzeichnet, dass**
- erstens, die Befestigungsteile (100, 100') der Halteelemente (10, 10'), die die Stange (103) bilden, an dem zumindest einen Kantenteil (21, 21') befestigt werden, und dann
- die einzelnen Halteelemente (10, 10') voneinander getrennt werden.

2. Verfahren nach Anspruch 1, **dadurch gekennzeichnet, dass** die Führungsteile (102, 102') der mehreren Halteelemente (10, 10') zusammen mit dem flexiblen Verbindungselement (11) in eine Führungskammer (30) einer Führungsschiene (3) eingesetzt sind.

3. Verfahren nach Anspruch 1, **dadurch gekennzeichnet, dass** zum Befestigen eines ersten Kantenteils (21) eines ersten Abschnitts eines blattförmigen Materials (2) an einem zweiten Kantenteil (21') eines zweiten Abschnitts einen blattförmigen Materials (2')
- die Befestigungsteile (100) der ersten Halteelemente (10) an dem ersten Kantenteil (21) befestigt werden,
- die Befestigungsteile (100') der zweiten Halteelemente (10') an dem zweiten Kantenteil (21') befestigt werden,
- die ersten Führungsteile (102) der ersten Halteelemente (10) und die zweiten Führungsteile (102') der zweiten Halteelemente (10') aneinander angrenzend in einer reißverschlussartigen Weise angeordnet sind, und
- das flexible Verbindungselement (11) durch die Schlaufen (L, L') der ersten Führungsteile (102) und der zweiten Führungsteile (102') hindurch geführt wird, um die ersten Halteelemente (10) und die zweiten Halteelemente (10') zu verbinden.

## Revendications

1. Procédé de fixation de sections d'un matériau en feuille (2, 2') avec un dispositif de fixation (1) qui comprend une pluralité d'éléments de retenue (10, 10'), au moins un élément de retenue (10, 10') ayant
- une partie de fixation (100, 100') configurée pour être attachée sur au moins une partie de bord (21, 21') d'au moins une section d'un matériau en feuille (2, 2') et
- une partie de guidage (102, 102') qui est connectée à ladite partie de fixation (100, 100'),
un élément de connexion flexible (11) étant configuré pour s'étendre le long de ladite au moins une partie de bord (21, 21') et pour être connecté à la portion de guidage (102, 102') dudit au moins un élément de retenue (10, 10') par ajustement par correspondance de formes et/ou par ajustement par force, le procédé comprenant les étapes suivantes :
- fournir ladite pluralité d'éléments de retenue (10, 10'),
- attacher les parties de fixation (100, 100') des éléments de retenue (10, 10') sur au moins une partie de bord (21, 21') d'au moins une section d'un matériau en feuille (2, 2'), et
- faire passer ledit élément de connexion flexible (11) à travers des boucles (L, L') desdites parties de guidage (102, 102') de la pluralité d'éléments de retenue (10, 10') le long de l'au moins une partie de bord (21, 21'),
les éléments de retenue (10, 10') étant prévus sous la forme d'une barre (103) comprenant une pluralité d'éléments de retenue (10, 10') connectés de manière intégrale ;
**caractérisé en ce que**
- en premier lesdites parties de fixation (100, 100') desdits éléments de retenue (10, 10') formant la barre (103) sont attachées sur ladite au moins une partie de bord (21, 21'), puis
- les éléments de retenue individuels (10, 10') sont séparés les uns des autres.

2. Procédé selon la revendication 1, **caractérisé en ce que** lesdites parties de guidage (102, 102') de ladite pluralité d'éléments de retenue (10, 10'), conjointement avec ledit élément de connexion flexible (11), sont insérés dans une chambre de guidage (30) d'un rail de guidage (3).

3. Procédé selon la revendication 1, **caractérisé en ce que** pour la fixation d'une première partie de bord (21) d'une première section d'un matériau en feuille (2) sur une deuxième partie de bord (21') d'une deuxième section d'un matériau en feuille (2'),
- les parties de fixation (100) de premiers éléments de retenue (10) sont attachées sur la première partie de bord (21),
- les parties de fixation (100') de deuxièmes éléments de retenue (10') sont attachées sur la deuxième partie de bord (21'),
- les premières parties de guidage (102) desdits premiers éléments de retenue (10) et les deuxièmes parties de guidage (102') desdits deuxièmes éléments de retenue (10') sont disposées les unes à côté des autres à la manière d'une fermeture éclair, et
- l'élément de connexion flexible (11) est passé à travers les boucles (L, L') des premières parties de guidage (102) et des deuxièmes parties de guidage (102') pour connecter lesdits premiers éléments de retenue (10) et lesdits deuxièmes éléments de retenue (10').
